# EUROPEAN PATENT APPLICATION

(11) **EP 2 555 578 A1**
(43) Date of publication of application: **06.02.2013**
(21) Application number: 11306013.1
(22) Date of filing: 04.08.2011
(51) Int. Cl.: H04W 74/08

(54) **Wireless networks over frequency agil radio systems**

(71) Applicant: Alcatel Lucent, 75007 Paris (FR)
(72) Inventor: Deb, Supratim, 560045 BANGALORE (IN); Chatterjee, Avhishek, 560045 BANGALORE (IN); C n, Kanthi, 560045 BANGALORE (IN); Srinivasan, Vikram, 560045 BANGALORE (IN)
(74) Representative: Benezeth, Philippe J.L. M.

(57) **Abstract**

Exemplary embodiments relate to a node, and related network, having at least one frequency agile data radio system(s), called data radio system(s). Said node also comprises at least one control radio system. Said node comprises control means including dividing means, for dividing a set of generalized links in at least high priority generalized links and low priority generalized links, and prioritized CSMA based MAC scheduling protocol module configured for making said generalized links contend for a channel corresponding to their frequency band by executing said CSMA based MAC scheduling protocol so that an high priority generalized link loses channel access trough a contention resolution only to another high priority generalized link. Exemplary embodiments also relate to a corresponding method for communicating data.

## Description

### TECHNICAL FIELD

Embodiments disclosed herein relate generally to wireless nodes and related wireless telecommunications networks.

### BACKGROUND

With the proliferation of diverse frequency bands, there is tremendous interest of frequency-agile wireless nodes and networks. "Frequency-agile" means that the transmitter and the receiver of a radio system of a node have the ability to tune across large swathes of spectrum.

Recent advances in radio technology make it possible for radio systems to tune their center frequencies across large swathes of spectrum, for example from 100 MHz to 8 GHz.

These radio systems can not only tune their center frequency, but also adapt the operating bandwidth. However, while it is possible for a radio system to tune to a wide swathe of spectrum, the bandwidth over which it can operate is limited. Typically, when a radio system is tuned to a given center frequency, the operating bandwidth associated with said center frequency is limited to 40 MHz about, what limits the exploitation of the diverse spectrum available.

Different frequency bands have different propagation properties. The lower frequency bands propagate a lot farther than the higher frequency bands. This implies that lower frequency bands provide better data rates at a fixed distance. It also implies that the lower frequency bands create higher interference to neighboring links.

For example, considering a 6 MHz of spectrum available from 100-106 MHz and another 6 MHz of spectrum available from 500-506 MHz. Wireless signals incur much less path loss over a lower frequency band and thus propagates further. Hence, frequency band 100-106 MHz will result in a higher data rate compared to frequency band 500-506 MHz, provided the ambient interference experienced in both the bands is around the same level.

IEEE 802.11a/b/g/n standard, called IEEE 802.11 standard, proposes CSMA based MAC protocol for wireless networks. But IEEE 802.11 standard does not account for specific spectrum characteristics. IEEE 802.11 standard assumes that spectrum is homogeneous.

Q-CSMA is an evolution of IEEE 802.11 standard that still has the drawbacks of being non adapted for tacking account of specific spectrum characteristics. Also, it has the additional drawback that it requires mesh nodes to be time synchronous. A detailed explanation of what is Q-CSMAis accessible in the publication referenced "Q-CSMA J. Ni, B. Tan, and R. Srikant. Q-CSMA: Queue length based csma/ca algorithms for achieving maximum throughput and low delay in wireless networks. In IEEE Infocom Mini-Conference, 2010".

There is thus a need to propose a multiband network which enables to determine, at each instant, which set of communicating node pairs should operate over which frequency band to transmit data with improved reliability and efficiency. There is also a need to propose a multiband network with wireless nodes which better exploits the diverse spectrum available.

### SUMMARY

Example embodiments provide wireless nodes and related wireless networks adapted to transmit data with improved reliability and efficiency.

An aspect of the invention relates to a node for a wireless network, said node having at least one, preferably two, frequency agile transmitter/receiver radio system(s), called data radio system(s), allowing said node to communicate with at least another node of said wireless network over different selectable frequency bands. Said node and said other node which are able to communicate over different selected frequency bands form a generalized links, a general link being defined as a link formed by a frequency agile transmitter radio system of a node, called transmitter node, and a frequency agile receiver radio system of another node, called receiver node, and a frequency band over which said link is able to communicate. Said node also comprises at least one control radio system for exchanging control messages with said at least another node of said wireless network over a control frequency band different from the frequency band used by said at least one data radio system. Said node comprises control means for executing a medium access control, called MAC, scheduling protocol based on a Carrier Sense Multiple Access, called CSMA, protocol to control communication between said node and said other node of said wireless network. Said control means comprise dividing means, for dividing a set of generalized links in at least high priority generalized links, called HP generalized link, and low priority generalized links, called LP generalized link. Said node comprises prioritized CSMA based MAC scheduling protocol module configured for making said generalized links contend for a channel corresponding to their frequency band by executing said CSMA based MAC scheduling protocol so that an HP generalized link loses channel access trough a contention resolution only to another HP generalized link.

Thus a higher priority generalized link is never beaten by a lower priority generalized link.

In various embodiments, said dividing means are also configured for dividing said set of generalized links in said HP generalized links and LP generalized links, and also in medium priority generalized links, called MP generalized links, and prioritized CSMA based MAC scheduling protocol module is also configured to ensure that a MP generalized link loses channel access trough a contention resolution only to an HP generalized link or to another MP generalized link.

According to another aspect, control means also comprise priority assigning means configured for assigning priorities to said generalized links in function of the physical-layer data rate of the frequency band associated with said generalized link.

In various embodiments, priority assigning means are configured to set a generalized link as a HP generalized link when gain of this generalized link is maximal compared to the gain of others generalized links.

According to a further aspect, priority assigning means are configured to choose a random frequency band from time to time and to determine the identity of the generalized link which has maximum gain over said chosen frequency band, said determined maximal gain generalized link being set as a HP generalized link.

According to some embodiments, said node is also configured to broadcast over the control channel the identity of the chosen frequency band, the identity of the determined maximal-gain generalized link, and, if any, the generalized link which has to be deactivated for allowing said maximal-gain generalized link to be active over the chosen frequency band.

According to another aspect, said gain of a generalized link is the gain in weight that the link of said generalized link operating in a particular frequency band can have by switching to a new frequency band corresponding to the frequency band of said generalized link.

According to a further aspect, the weight of a generalized link is defined by the multiplication of the queue-length of the transmitter node of the generalized link and the physical-layer data rate of the generalized link in the frequency band of said generalized link, said queue-length corresponding to the number of packets awaiting for transmission by the transmitter node of the corresponding generalized link.

In various embodiments, priority assigning means are configured to compute gain, noted gain(1), of a generalized link noted 1, whose transmitter node, noted v, is able to activate said generalized link 1 over a frequency band noted fj, as follows :
gain (1) over frequency band fj = weight of generalized link 1 over fj - loss(v)
wherein loss(v) is a loss value of the transmitter node v which is computed as follows:
Case-1: if there exists some other active generalized link denoted l' for which v is also a transmitter node over frequency band fj, then loss(v) is set equal to the weight of generalized link l' over said frequency band fj ;
Case-2: if condition of Case-1 does not hold and if there is a spare transmitter radio system at node v, then loss(v) is set equal to 0 ;
Case-3: if the conditions of Case-1 and Case-2 do not hold, then loss(v) is set to the minimum weight of all active generalized links over all frequency bands for which v is the transmitter node.

According to another aspect, said node comprises means for determining the queue length of a generalized link from information embedded in Request to Send / Clear to Send messages, called RTS/ CTS messages, sent by the node pair of said generalized link on the control channel trough the control radio systems of the node pair.

According to another aspect, priority assigning means are configured to, whenever Request to Send / Clear to Send messages, called RTS/ CTS messages, transmitted over a generalized link, are overheard on the control channel by said node, update the set of active generalized links.

According to a further aspect, said node comprises list maintaining means configured to maintain three lists of generalized links, namely HP list containing HP generalized links, MP list containing MP generalized links and LP list containing LP generalized links.

In various embodiments, said list maintaining means are configured to, when said node hears a broadcast from another node of the network indicating that said node is either the transmitter node or the receiver node of a HP generalized link, add said generalized link to the HP list.

In other embodiments, wherein said list maintaining means are configured to remove a HP generalized link from the HP list once said HP generalized link gets activated for the first time.

According to another aspect, said list maintaining means are configured so that any generalized link that gets removed from the HP list is added to the MP list of the same node, a generalized link in the MP list being removed only when it loses contention of the channel over the frequency band corresponding to said generalized link.

According to a further aspect, said list maintaining means are configured so that each generalized link that is not a part of the HP list or the MP list belongs to the LP list.

In various embodiments, said prioritized CSMA based MAC scheduling protocol module is configured to, whenever said or one of said data radio system(s) of said node becomes free, performing the steps of :
- visiting the lists in order of priority and pick the first inactive generalized link that has non-zero queue length ;
- making said data radio system switch to the selected generalized link's frequency band and assess if the channel is free ;
- if said channel is free, transmitting an RTS message over the control channel at a time slot selected uniformly:
   between [0 ; CW/2 - 1] if said generalized link that has been picked is an HP generalized link,
   between [CW/2; 3CW/4 - 1] if said generalized link that has been picked is an MP generalized link,
   and between [3CW/4;CW - 1] if said generalized link that has been picked is an LP generalized link,
   CW being a predetermined size of a contention window;
   said RTS message containing the following information :
      (i) the identity of the receiver node of the picked generalized link and the corresponding frequency band, and
      (ii) queue length of said picked generalized link.

According to a another aspect, said prioritized CSMA based MAC scheduling protocol module is also configured to command transmission over:
- a HP generalized link during a constant time interval, noted TXOPT, if contention has been won by said HP generalized link,
- over a MP generalized link, respectively a LP generalized link, during one packet duration if contention has been won by said MP generalized link, respectively said LP generalized link.

In various embodiments, said constant duration TXOPT is chosen so that multiple packets can be transmitted, typically a few milliseconds.

MAC scheduling issue in such node(s) and related networks is to determine, at each instant, which set of communicating node-pairs should operate over which frequency band and, preferably, over which data radio system. The proposed node and related network solve this issue by using a specific CSMA based MAC scheduling protocol which takes account of priorities assigned to generalized links. Said priorities are assigned to generalized links in function of frequency bands related to said generalized links what enables said node and related network to transmit data with improved reliability and efficiency and with better exploitation of the diverse spectrum available.

In various embodiments, said CSMA is a carrier senses multiple access protocol with collision avoidance (CSMA\CA).

According to various embodiments, wireless nodes and related networks are equipped with multiple frequency agile data radio systems and the nodes are not necessarily synchronized. CSMA based MAC scheduling protocol is adapted to determine which node should transmit to which node at which time over which frequency band and over which data radio system.

In some embodiments, the CSMA based MAC scheduling protocol is distributed and does not require synchrony among network nodes. According to a further aspect, the CSMA based MAC scheduling protocol incurs low overhead and is easy to implement. According to a further aspect, the CSMA based MAC scheduling protocol achieves high throughput and low network delay, and is robust against packet losses.

High-throughput means that the CSMA based MAC scheduling protocol is either throughput-optimal or achieve a constant fraction of the throughput-optimal region. The throughput-optimal region for a wireless network is the set of all arrival rates for which queue sizes or lengths remain bounded.

The CSMA based MAC scheduling protocol accounts for diverse spectrum characteristics, in particular for diverse propagation characteristics of the different frequency bands, and client locations.

In particular said CSMA based MAC scheduling protocol accounts for diverse frequency bands in three ways. Firstly, said protocol or algorithm has notion of weight that depends on the physical layer data rate of the operating frequency band. The weights capture the relative values of the frequency bands. Secondly, in various embodiments, the channel sensing for the protocol is performed over the actual frequency band and not based on RTS/CTS over control channel, what makes sure that the interference neighborhood is frequency band dependent. Finally, priorities are assigned to generalized links that depend on gain in switching to a particular band. Said protocol can be viewed as prioritized CSMA based MAC protocol. Roughly, in various embodiments, higher priority is assigned to nodes to large queue-lengths corresponding to the number of packets waiting for transmission in a MAC buffer of a transmitter node.

In various embodiments, said prioritized CSMA based MAC scheduling protocol provides very low network delay with a small sacrifice in throughput. Thus it is suited for video based and real-time applications that will be dominant in the near future.

According to another aspect, it is provided a wireless network including nodes as proposed above.

According to a further aspect, it is provided a method for communicating data through a wireless network as proposed above.

Various combinations and subset of the above aspects are provided.

### BRIEF DESCRIPTION OF THE DRAWINGS

In order to better understand various exemplary embodiments, reference is made to the accompanying drawings, wherein:

FIG. 1 is a schematic architecture of the upper MAC and the lower MAC layers of a node ;

FIG.2 is a schematic topology of nodes in a wireless network according to an example embodiment ;

FIG.3 is a flowchart of a method carried out by a leader node to inform follower nodes about the identity of high priority generalized links.

### DETAILED DESCRIPTION

Referring now to the drawings, there are disclosed broad aspects of various exemplary embodiments.

A brief explanation of what is CSMA and CSMA/CA is described below. Carrier sense multiple access CSMA, in computer networking, is a wireless network multiple access method in which a carrier sensing scheme is used. A node wishing to transmit data has to first listen to the channel for a predetermined amount of time to determine whether or not another node is transmitting on the channel within the wireless range. If the channel is sensed "idle," then the node is permitted to begin the transmission process. If the channel is sensed as "busy," the node defers its transmission for a random period of time.

Carrier sense multiple access with collision avoidance (CSMA/CA), is a modification of carrier sense multiple access CSMA. Collision avoidance is used to improve the performance of CSMA by attempting to divide the wireless channel equally among all transmitting nodes within the collision domain.

### Network Model

According to an exemplary embodiment, a wireless network is considered with V as the set of nodes. In various embodiments, each node comprises at least two frequency agile data radio systems, called data radio systems. Thus data radio system resources available are multiple frequency bands with diverse propagation characteristics. Frequency band is meant a contiguous slice of spectrum of width at most Bmax, the maximum tunable range of a radio system. If there is a larger contiguous band available denoted W, than W is split into bands of equal width denoted Bmax, with the last band having width possibly less than Bmax. Since the frequency bands have diverse propagation characteristics, the data rate between a transmitter-receiver node pair in the network and the interfering neighbors of the transmitter-receiver node pair, are frequency dependent.

For instance, if Bmax = 40 MHz, each data radio system of a node of the related network is considered to be able to tune up to 40 MHz. Considering that in a location, there is whitespace spectrum available from 512 MHz-602MHz of width Wavailable =90 MHz. This band is split as multiple bands of width at most Bmax as follows: 512-552 MHz, 552-592 MHz, 592-602 MHz.

According to various embodiments, each data radio system of each network node is a half-duplex frequency data radio system capable of tuning across a large frequency range, for example from 100 MHz to 2.5 GHz. An half-duplex radio is a radio that can either transmit radio signals or receive radio signals at any time but cannot do both simultaneously. In various embodiments, said nodes are mesh nodes.

In some embodiments, the different nodes may have different number of data radio systems. For ease of exposition, in the embodiments described hereafter, the different nodes have equal number of data radio systems with each node. It is assumed that at any given time any data radio system can tune to only a single frequency band, e.g. 500MHz, 2.4GHz etc., and the bandwidth can range from 0 to Bmax.

### Network and generalized links

It is assumed that the spectrum available over the network is fragmented and spans a large range, e.g., 50-700MHz, 2.4GHz and 5.2GHz. It is assumed that the frequency bands are ordered in the real axis from left to right, and in the description it will be simply used band fj ; j = 1; 2; ... ; M to mean the jth frequency band. M is the number of frequency bands.

According to radio propagation physics, if all other parameters remain same, the received signal strength at a receiver is inversely proportional to the square of the carrier frequency. In other words, it is possible that two nodes in the network may be able to communicate on a frequency band f1 but unable to communicate on frequency band f2.

The network connectivity in frequency band-j is modeled as a graph Gj(V; Ej); j = 1; 2; :::; M. V is the set of network nodes, and Ej is designed so that, for two nodes u and v, (u; v) belong to Ej if u can communicate with v over frequency band fj at a non-zero data rate.

A generalized link is defined by :
(i) the frequency band fj over which the link exists, and
(ii) the ordered node-pair (v; u) to indicate that node v is the transmitting node of the link and u is the receiving node of the link. More precisely, one of the radio systems of node v, respectively u, is the transmitting radio, respectively receiving radio.

An interference model is used. In this interference model, two links denoted l1 and 12 interfere over a frequency band fj if any one of the end points of l1 can decode messages from any one of the end points of 11, even at the lowest possible modulation and coding.

Each generalized link denoted l has a set of interfering links denoted by Il. Thus, if a generalized link denoted l' belongs to Il, l and l' cannot transmit simultaneously. The notion of generalized links easily accounts for the fact that the interfering node-pairs of a node-pair can be different in different frequency bands.

### Architecture

One key principle is to ensure that a node with a large queue-length does not lose contention to another interfering node with a smaller queue-length. To guarantee this in a distributed manner for various embodiments, the network is partitioned in groups. In various embodiments, each group has one leader and followers. During the execution of the prioritized CSMA based MAC protocol detailed hereafter, the leader is responsible for decisions that apply to all group members. The followers listen through broadcasted messages to leader about these decisions.

In particular, there are two kinds of decisions the leaders take which are detailed hereafter:
(i) choosing from time to time a random frequency band over which high priority generalized links in the group will operate,
ii) facilitating the procedure for obtaining the maximal gain generalized link in the group and broadcasting its identity.

The leaders and their corresponding followers selection is a one-time procedure as described below. Once this step is performed, the prioritized CSMA based MAC protocol works like CSMA with the following twist: each generalized link contends for the channel instead of each link, where a generalized link is defined as 2-tuple of link and frequency band. As explained above, a link is a transmitter-receiver node pair.

For instance, considering a wireless network with simply two interfering links, 11 and 12, 11 and 12 being source destination pairs. l1 is defined as a link between two nodes noted A and B. It is supposed that A can potentially communicate with B, provided link 12 is silent, in three different frequency bands: f1 (512-518 MHz), f2 (524-530 MHz), andf3 (560-566 MHz). Then, there are three generalized links between A and B given by the tuples (11, f1), (11, f2), and (11, f3).

Certain links are assigned higher priority than others in a dynamic manner so that a higher priority generalized link never gets beaten by a lower priority generalized link in CSMA contention for access of a frequency band.

There are three priority classes, low, medium, and high. In the following, it is described how the priorities are decided for each data radio system of each node dynamically and how the prioritized CSMA based MAC protocol is designed to ensure the priority order in channel access through contention resolution.

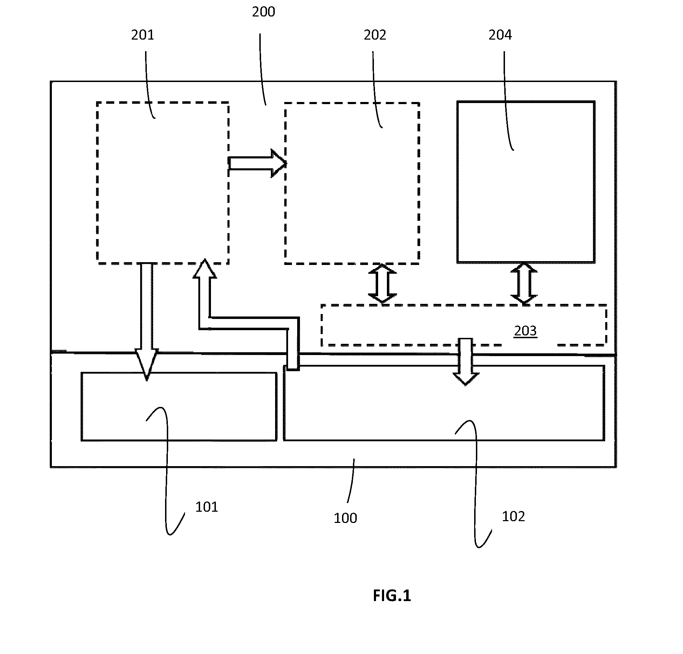

The architecture of the control means of a node for executing said prioritized CSMA based MAC protocol is illustrated at figure 1.

Said architecture comprises a lower MAC layer 100 which includes a radio frequency hardware 101 for the control radio system and a radio frequency hardware 102 for data radio systems.

Said architecture also comprises an upper MAC layer 200 which includes a group control module 201, for group leaders, which forms priority assigning means. Said architecture also comprises a priority control module 202 which forms dividing means to maintain three priority lists for each data radio system. In various embodiments said dividing means 202 can be realized with a Finite State Module (FSM) module.

Said upper MAC layer 200 also comprises a prioritized CSMA based MAC scheduling protocol module 203, simply called Priority-CSMA module, and per-destination packet MAC buffer(s) 204.

The functioning of said architecture is described below using the following high level steps:

1. In the beginning, groups of nodes are formed and each node is identified as a group leader or a follower as detailed hereafter. The group control module 201 at the leader also interacts with the control radio system 101 for broadcasting information relevant for the entire group.

2. The group control module 201 at the group leader makes decisions that apply to the entire group, namely choosing frequency bands fj over which high priority generalized links operate and broadcasting said high priority generalized link's identity. This information is also fed to the priority control module 202.

3. The priority control module 202 maintains for each data radio system of the related node, three lists of outgoing generalized links, high priority list, medium priority list, and low priority list, thus classifying which generalized links out of the node belongs to which priority class. The priority information is fed to the Priority-CSMA module 203.

4. The Priority-CSMA module 203 performs prioritized CSMA based MAC protocol in a manner described later. The priority class of a generalized link is learned from the priority control module 202, also called priority control module, which maintains three priority lists for each data radio system. Once transmissions over a generalized link from a particular priority class happen, this information is also fed to the Priority Control module. In case of conceiving said Priority Control module 202 with a FSM module, said information related to transmissions over a generalized link from a particular priority class, is used for internal state transition of the FSM module.

5. Once the Priority-CSMA module 203 wins contention, this information is fed to the lower MAC layer so that it can transmit packet over the generalized link that has gained channel access right.

The CSMA or CSMA\CA based MAC protocol carried out by the nodes of the network comprises the following steps.

At time 0, an independent dominating set is computed in G1(V;E1), i.e. on the network graph in the lowest frequency band. There are known techniques to compute a dominating independent set, as detailed in the publication of S. Parthasarathy and R. Gandhi, entitled "Distributed algorithms for coloring and domination in wireless ad hoc networks. In FSTTCS, 2004."

An independent dominating set on a graph Gj(V;Ej) is a set of nodes S such that every node v belonging to V\S has an edge to some node in S, no two nodes in S having an edge between them.

Thus, a set of nodes D is selected in f1 such that every other node is a neighbor of some node in D in G1(V; E1). The nodes in D are called leaders in the rest of the description. Every node not in D becomes a follower of any one neighboring leader. A leader with all its followers are referred to as a group.

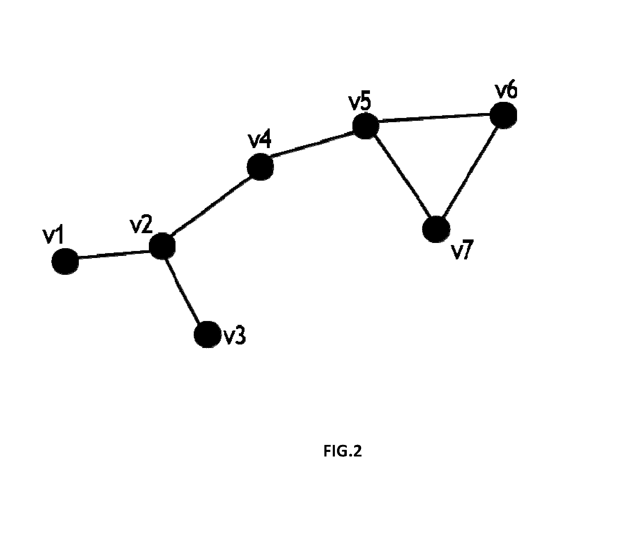

An example of grouping is illustrated at figure 2 with a simple topology. Considering said topology at figure 2 comprising nodes v1 to v7, an edge between two nodes means these two nodes can talk to each other, and, furthermore, cannot be involved in different communications simultaneously. For instance (v2,v1) and (v4,v5) communications cannot happen simultaneously because there is an edge between v2 and v4. In this the set S={v2,v5} forms a dominating independent set. Thus, v2 and v5 can be designated as leaders. There are two groups: G1={v1,v2,v3} and G2={v4,v5,v6,v7}. The leader of group G1 is v2 and the leader of group G2 is v5.

An algorithm, called maximal gain algorithm, executed by the MAC architecture of a leader node for determining which generalized link presents maximal gain is detailed hereafter. In various embodiments, said maximal gain algorithm is used for wireless networks whose nodes could be asynchronous or where control packets could be lost.

In various embodiments, each wireless node has one extra radio system, called control radio system, for exchange of control messages on a dedicated frequency control band. Nodes use the control band to send RTS/CTS messages to reserve an intended frequency band, said intended frequency band being decided using an algorithm or protocol described hereafter. RTS/CTS message is the standard message used in Wi-Fi like systems which contains transmitters MAC id, intended receiver's MAC id, header, CRC, and control filed. In various embodiments, RTS/CTS messages sent by nodes have an additional field containing queue-length at the MAC buffer of the transmitter node. Said additional field could also be part of the frame control field.

The gain of the generalized link is mathematically defined later. In essence, this is the gain in weight, a link operating in a particular frequency band can have by switching to a new frequency band, said new frequency band being chosen by the leader. The weight of a generalized link is defined by the multiplication of the queue-length at the transmitter MAC buffer and the physical layer data rate of the generalized link in the operating frequency band. Thus the weight depends on the frequency band through the physical layer data rate of the frequency band.

In various embodiments, the leader in each group performs key functions as maintaining, updating, and broadcasting information about the group members, and selecting the maximum gain generalized link dynamically.

Information is updated as follows. Nodes send RTS/CTS messages over the control band for an intended generalized link. The choice of the intended generalized link is described later in the algorithm. Any RTS/CTS message contains the following: (i) queue-length information of the intended link, (ii) the frequency band of the intended generalized link, (iii) and the data rate of the intended generalized link.

Whenever a leader hears an RTS/CTS message from a group member over the control frequency band, it updates the queue length of the intended generalized link from the information embedded in the RTS/CTS messages, and if the data rate of the intended generalized link has changed, then this information is also updated.

In various embodiments, nodes also send queue length updates when change in queue length due to packet arrivals is beyond a threshold.

In various embodiments, the algorithm used to determine generalized links with maximal gain is a follows.

Every T units of time, the leader selects the maximal-gain link using the following steps:
i) the leader selects a random frequency band fj,
ii) in said frequency band fj, the leader computes the maximal gain link based on its information of the weight of each link and the current set of active links. As explained above, the weight of a link over band fj is defined as the multiplication of the physical-layer data rate of the link over fj and the queue length of the MAC buffer of the transmitter node.

The gain of a generalized link noted l is computed as follows. The transmitter node of generalized link l is denoted by v. First, a loss value denoted by loss(v) is computed as follows:
Case-1: if there exists some other active generalized link l' with transmitter node as v and frequency band as fj, then loss(v) is set equal to the weight of generalized link l' over fj. The active generalized link l'is said to be sub(l), i.e. the generalized link that will be substituted by generalized link l over fj.
Case-2: if condition of Case-1 does not hold and there is a spare radio system in the transmitter node v, then set loss(v)=0; there is no sub(l) in this case.
Case-3: if the condition of Case-1 and Case-2 do not hold, then loss(v) is set to the minimum weight of all active generalized links over all frequency bands for which v is the transmitter node. The generalized link with the minimum weight among all active generalized links is called sub(l).

The gain of any generalized link l over frequency band fj is computed as follows : gain(l) over fj = "weight of generalized link l over fj" -loss(v), where v is the transmitted node of generalized link 1.

The maximum gain generalized link, noted l*, is the generalized link in the leaders group with maximum gain over fj, i.e. gain(l*) = maxl "gain(l) over fj", where the maximum is taken over all links l whose transmitter node belongs to the leader's group.

The leader then broadcasts over the control channel the identity of the chosen frequency band fj, the maximal-gain generalized link l*, and sub(l*) if any. sub(l*) has to be deactivated for generalized link l to be active over the chosen frequency band.

In various embodiments, an alternative to picking a frequency band randomly is as follows. The leader computes the maximal-gain generalized link over all the frequency bands available. Then frequency band over which the gain of the maximal-gain link is highest, is chosen as the frequency band of choice by the leader. This approach requires more computation since the leader has to compute the maximal gain generalized link over every available frequency band and then compute their maximum.

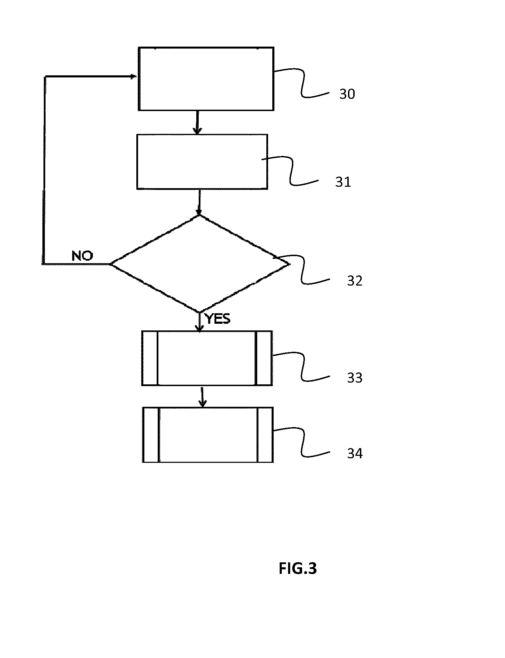

Referring to figure 3, a flowchart carried out by a leader node is shown.

At step 30, the leader listens to RTS/CTS messages for queue length information from other group members. At step 31, whenever the leader hears an RTS/CTS message from a group member over the control band, it updates the queue length of the intended generalized link and it updates the set of active generalized links in its group. An active generalized link is a transmitter-receiver pair of data radio systems that is involved in successful communication over the frequency band of said generalized link.

At step 32 the leader node determines if a predetermined time duration has elapsed since last broadcast of the identity of a maximal gain generalized link. If the result is negative, the leader node returns to step 30. If the result is positive, the leader chooses at step 33 a random frequency band and computes maximal gain to determine the generalized link in its group which presents maximal gain for said chosen frequency band. At step 34, the leader node broadcasts the identity of the determined maximal gain generalized link, which is also referred as a high priority generalized link.

Each node maintains for each data radio system, a set of three lists of generalized links, namely High Priority (HP) list, Medium Priority (MP) list and Low Priority (LP) list.

Addition and deletion into HP, MP, LP lists are carried out by the Priority-Control Module 202 of the node. The lists are updated as follows for each data radio system of each node.

If a node hears a broadcast, over the control frequency band, from its leader indicating that it is the transmitter of the maximum-gain generalized link, it adds this generalized link to the HP list. A generalized link is removed from the HP list once it gets activated for the first time.

Any generalized link that gets removed from the HP list is added to the MP list of the same data radio system. A generalized link in MP list is removed only when it loses contention of the channel over the band corresponding to the generalized link.

Every other generalized link that is not a part of HP or MP list belongs to LP list. In various embodiments, a generalized link belongs to LP list of all data radio systems or none of the data radio systems of the corresponding node.

Whenever a data radio system becomes free, the prioritized CSMA based MAC protocol is carried out by Priority-CSMA Module 203 with the following steps:
Step-1: The data radio system visits the lists in order of priority, i.e. in first the HP list, followed by the MP list and then the LP list, and picks the first inactive link that has non-zero queue length.
Step-2: The data radio system switches to the selected generalized link's frequency band and assesses if the channel is free. If it is free, it transmits an RTS message over the control channel at a slot selected uniformly between [0;CW/2 - 1] if it is an HP generalized link, between [CW/2; 3CW/4 - 1] if it is an MP generalized link, and between [3CW/4;CW - 1] if it is an LP generalized link. CW is the contention window size. This is contention resolution slot as in CSMA-CA protocol over Wi-Fi. The RTS message contains the following information (i) the destination and communication band, and (ii) queue size of the link. When the destination node receives an RTS, it responds with a CTS if resources, data radio system and frequency band, are available to it. The CTS also echoes the information in the RTS.
Step-3: If the contention is successful, then transmission happens for a constant time interval, noted TXOPT, for HP generalized links, and for one packet duration for MP and LP generalized links. The constant duration TXOPT is chosen so that multiple packets can be transmitted, typically a few milliseconds.

It should be apparent from the foregoing description that various exemplary embodiments of the invention may be implemented in hardware, firmware, and/or software. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a computer, network node, router, switch, or similar device. Thus, a machine-readable storage medium may include read-only memory (ROM), random-access memory (RAM), magnetic disk storage media, optical storage media, flash-memory devices, and similar storage media.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications may be implemented while remaining within the spirit and scope of the invention. Accordingly, the foregoing disclosure, description, and figures are for illustrative purposes only and do not in any way limit the invention, which is defined only by the claims.

## Claims

1. Node (v2) for a wireless network, said node having at least one, preferably two, frequency agile transmitter/receiver radio system(s), called data radio system(s), allowing said node to communicate with at least another node (v1) of said wireless network over different selectable frequency bands, said node (v2) and said other node (v1) which are able to communicate over different selected frequency bands forming generalized links, a general link being defined as a link formed by a frequency agile transmitter radio system of a node (v2), called transmitter node, and a frequency agile receiver radio system of another node (v1), called receiver node, and a frequency band over which said link is able to communicate,
and at least one control radio system for exchanging control messages with said at least another node (v1) of said wireless network over a control frequency band different from the frequency band used by said at least one data radio system,
said node comprising control means for executing a medium access control, called MAC, scheduling protocol based on a Carrier Sense Multiple Access, called CSMA, protocol to control communication between said node (v2) and said other node (v1) of said wireless network,
said control means comprising :
dividing means (202), for dividing a set of generalized links in at least high priority generalized links, called HP generalized link, and low priority generalized links, called LP generalized link,
and prioritized CSMA based MAC scheduling protocol module (203) configured for making said generalized links contend for a channel corresponding to their frequency band by executing said CSMA based MAC scheduling protocol so that an HP generalized link loses channel access trough a contention resolution only to another HP generalized link.

2. A node according to claim 1, wherein said dividing means (202) are also configured for dividing said set of generalized links in said HP generalized links and LP generalized links, and also in medium priority generalized links, called MP generalized links,
prioritized CSMA based MAC scheduling protocol module (203) being also configured to ensure that a MP generalized link loses channel access trough a contention resolution only to an HP generalized link or to another MP generalized link.

3. A node according to any one of claims 1 or 2, wherein said control means also comprise priority assigning means (201) configured for assigning priorities to said generalized links in function of the physical-layer data rate of the frequency band associated with said generalized link.

4. A node according to any one of claims 1 to 3, wherein priority assigning means (201) are configured to set a generalized link as a HP generalized link when gain of this generalized link is maximal compared to the gain of others generalized links.

5. A node according to claim 4, wherein priority assigning means (201) are configured to choose a random frequency band from time to time and to determine the identity of the generalized link which has maximum gain over said chosen frequency band, said determined maximal gain generalized link being set as a HP generalized link.

6. A node according to any one of claims 4 or 5, wherein priority assigning means (201) are configured to compute gain, noted gain(1), of a generalized link noted l, whose transmitter node, noted v, is able to activate said generalized link l over a frequency band noted fj, as follows :
gain (l) over frequency band fj = weight of generalized link l over fj - loss(v)
wherein the weight of a generalized link is defined by the multiplication of the queue-length of the transmitter node of the generalized link and the physical-layer data rate of the generalized link in the frequency band of said generalized link, said queue-length corresponding to the number of packets awaiting for transmission by the transmitter node of the corresponding generalized link, and
wherein loss(v) is a loss value of the transmitter node v which is computed as follows:
Case-1: if there exists some other active generalized link denoted l' for which v is also a transmitter node over frequency band fj, then loss(v) is set equal to the weight of generalized link l' over said frequency band fj ;
Case-2: if condition of Case-1 does not hold and if there is a spare transmitter radio system at node v, then loss(v) is set equal to 0 ;
Case-3: if the conditions of Case-1 and Case-2 do not hold, then loss(v) is set to the minimum weight of all active generalized links over all frequency bands for which v is the transmitter node.

7. A node according to any one of claims 1 to 6 combined with claim 2, wherein said node comprises list maintaining means configured to maintain three lists of generalized links, namely HP list containing HP generalized links, MP list containing MP generalized links and LP list containing LP generalized links.

8. A node according to claim 7, wherein said prioritized CSMA based MAC scheduling protocol module (203) is configured to, whenever said or one of said data radio system(s) of said node becomes free, performing the steps of :
- visiting the lists in order of priority and pick the first inactive generalized link that has non-zero queue length ;
- making said data radio system switch to the selected generalized link's frequency band and assess if the channel is free ;
- if said channel is free, transmitting a Request to Send message, called RTS message, over the control channel at a time slot selected uniformly:
between [0 ; CW/2 - 1] if said generalized link that has been picked is an HP generalized link,
between [CW/2; 3CW/4 - 1] if said generalized link that has been picked is an MP generalized link,
and between [3CW/4;CW - 1] if said generalized link that has been picked is an LP generalized link,
CW being a predetermined size of a contention window;
said RTS message containing the following information :
(i) the identity of the receiver node of the picked generalized link and the corresponding frequency band, and
(ii) queue length of said picked generalized link.

9. A node according to claim 8, wherein said prioritized CSMA based MAC scheduling protocol module (203) is also configured to command transmission over:
- a HP generalized link during a constant time interval, denoted TXOPT, if contention has been won by said HP generalized link,
- over a MP generalized link, respectively a LP generalized link, during one packet duration if contention has been won by said MP generalized link, respectively said LP generalized link.

10. A wireless network comprising a group of nodes (v1, ...,v7) according to any one of claims 1 to 9.

11. A wireless network according to claim 10, wherein said group of nodes also includes at least one node (v2), called leader node, according to any one of claims 1 to 19 combined with claim 3, the other nodes (v1, v3) of said group being called follower nodes,
said leader node (v2) being configured to broadcast messages over the control channel containing identities of generalized links which are assigned high priority,
followers nodes of said group being configured to listen to said broadcast messages.

12. A wireless network according to any one of claims 10 or 11, each node of the group being according to claim 2, wherein each node comprises list maintaining means configured to maintain three lists of generalized links, namely HP list containing HP generalized links, MP list containing MP generalized links and LP list containing LP generalized links.

13. A wireless network according to claim 12, wherein prioritized CSMA based MAC scheduling protocol module (203) of each node is configured to, whenever said or one of said data radio system(s) of said node becomes free, performing the steps of :
- visiting the lists in order of priority and pick the first inactive generalized link that has non-zero queue length ;
- making said data radio system switch to the selected generalized link's frequency band and assess if the channel is free ;
- if said channel is free, transmitting a Request To Send message, called RTS message, over the control channel at a time slot selected uniformly:
between [0 ; CW/2 - 1] if said generalized link that has been picked is an HP generalized link,
between [CW/2; 3CW/4 - 1] if said generalized link that has been picked is an MP generalized link,
and between [3CW/4;CW - 1] if said generalized link that has been picked is an LP generalized link,
CW being a predetermined size of a contention window ;
said RTS message containing the following information :
(i) the identity of the receiver node of the picked generalized link and the corresponding frequency band, and
(ii) queue length of said picked generalized link ;
said receiver node being configured to, after receiving said RTS message, respond with a Clear to Send message, called CTS message, if said receiver node and frequency band are available, said CTS message echoing the information contained in the RTS message.

14. Method for communicating data through a wireless network comprising a plurality of nodes, each node having at least one, preferably two, frequency agile transmitter/receiver radio system(s), called data radio system(s), allowing said node to communicate with at least another node (v1) of said wireless network over different selectable frequency bands, said node (v2) and said other node (v1) which are able to communicate over different selected frequency bands forming generalized links, a general link being defined as a link formed by a frequency agile transmitter radio system of a node (v2), called transmitter node, and a frequency agile receiver radio system of another node (v1), called receiver node, and a frequency band over which said link is able to communicate, each node having also at least one control radio system for exchanging control messages with said at least another node (v1) of said wireless network over a control frequency band different from the frequency band used by said at least one data radio system,
said method also comprising the steps of :
- dividing a set of generalized links in at least high priority generalized links, called HP generalized link, and low priority generalized links, called LP generalized link,
- making said generalized links contend for a channel corresponding to their frequency band by executing a CSMA based MAC scheduling protocol so that an HP generalized link loses channel access trough a contention resolution only to another HP generalized link.

15. A method according to claim 14 wherein the step of dividing also comprises dividing said set of generalized links in medium priority generalized links, called MP generalized links,
CSMA based MAC scheduling protocol being also configured to ensure that a MP generalized link loses channel access trough a contention resolution only to an HP generalized link or to another MP generalized link.
